# EUROPÄISCHE PATENTSCHRIFT

(11) **EP 1 426 171 B1**
(45) Veröffentlichungstag und Bekanntmachung des Hinweises auf die Patenterteilung: **15.03.2006**
(21) Anmeldenummer: 03022719.3
(22) Anmeldetag: 09.10.2003
(51) Int. Cl.: B29D 30/66

(54) **Patrizenförmiges Werkzeug einer Reifenvulkanisationsform und damit hergestellter Fahrzeugreifen**
Male moulding tool for a vulcanising mould and tyre produced therewith
Outil en forme de poinçon pour moule de vulcanisation et pneumatique produit avec ce moule

(30) Priorität: 06.12.2002 DE 10257007
(43) Veröffentlichungstag der Anmeldung: 09.06.2004
(73) Patentinhaber: Continental Aktiengesellschaft, 30165 Hannover (DE)
(72) Erfinder: Gonzales-Diez, Inocencio, 08029 Barcelona (DE); Schlittenhard, Jan, 30900 Wedemark (DE)

(56) Entgegenhaltungen:
- DE-A- 1 579 111
- DE-B- 1 171 769
- DE-B- 1 229 714
- FR-A- 2 722 728
- GB-A- 952 312

## Beschreibung

Die Erfindung betrifft ein patrizenförmiges Werkzeug einer Reifenvulkanisationsform gemäß dem Oberbegriff des Patentanspruchs 1, welcher aus der DE-A-1229 714 bekannt ist, und einem damit hergestellten Fahrzeugluftreifen gemäß Anspruch 5.

Gattungsgemäße patrizenförmige Werkzeuge, welche auch Pins oder Spikes-Pins genannt werden, dienen dazu, während des Vulkanisationsprozesses eines Fahrzeugluftreifens Sacklöcher, welche im folgenden kurz als Löcher bezeichnet werden, in Profilklötze des Laufstreifens des zu formenden Fahrzeugreifens einzubringen. Nach Fertigstellung des Reifens werden in diese Löcher Spikes eingebracht, also stift- oder bolzenförmige Metalleinsätze, welche dazu dienen, die Eisgriffigkeit des Reifens zu erhöhen. Die Spikes selbst weisen in der Regel einen größen Durchmesser als die Löcher auf, wodurch nach Einführen des Spikes die das Loch umgebende Masse des Gummis des Profilklotzes den Spike würgend umschließt. Die Löcher im Profilklotz und entsprechend die patrizenförmigen Werkzeuge der Reifenvulkanisationsform sind zumeist zylinderförmig, wobei von der reinen Zylinderform abweichende Formen schon beschrieben wurden. So sind aus der DE 18 60 933 U1 Lochkonturen bekannt, bei denen die Löcher konisch gestaltet oder keulen- oder bundförmig erweitert ausgebildet sind und in einer besonderen Ausgestaltungsform das zylindrische Loch in eine Kaverne größeren Durchmessers mündet. Bezüglich der in die Löcher einzusetzenden Spikes sind auch schon vom kreisrunden Querschnitt abweichende Formen beschrieben worden, beispielsweise in der DE 11 71 769 A.

Bisherige Verbesserungsvorschläge hinsichtlich der Löcher oder der Spikes zielen auf einen verbesserten Halt der Spikes im Profilklotz ab. Im Fahrbetrieb ist nämlich der Metalleinsatz und das ihn umgebende Gummimaterial des Profilklotzes starken Kräften, insbesondere Querkräften, Taumel- und Pendelbewegungen, Vibrationen und dergleichen ausgesetzt, die dazu führen können, dass sich die Spikes aus ihrer Verankerung lösen und aus dem Reifen herausgeschleudert werden können. Dieses Problem konnte bislang nicht befriedigend gelöst werden. Zu den oben geschilderten Problemen kommt noch hinzu, dass durch Rotationsbewegungen der Spikes in ihrem Sitz Spalten entstehen, welche Schmutz und andere Fremdkörper eindringen lassen, welchen den Spikes korrosiv angreifen und auch sonst das Lockern und letztendlich Herausschleudern des Spikes fördern.

Das erfindungsgemäße patrizenförmige Werkzeug reduziert die geschilderten Probleme. Erfindungsgemäß zeichnet sich das patrizenförmige Werkzeug gemäß Patentanspruch 1 dadurch aus, dass der Querschnitt des vorderen Endes des patrizenförmigen Werkzeugs zumindest bereichsweise von einer kreisrunden Form abweicht.

Entsprechend dieser Form des Werkzeuges entsteht dann ein Loch im Profilklotz, das zumindest bereichsweise unrund ist. Die Erfinder haben nämlich erkannt, dass ein an und für sich vorteilhafter Spike mit zumindest von der Kreisform abweichenden Schaft nicht allein ausreicht, dass Problem einer Verdrehsicherung zu gewährleisten. Auch ein derartiger Spike dreht sich im Betrieb des Reifens um seine Längsachse und fördert damit das Eindringen von Schmutzpartikeln und Fremdkörpern, was zu den oben beschriebenen Folgen führt. Alle bekannten bisherigen Lösungen, auch solche mit im Längsschnitt von der Zylinderform abweichenden Löchern bzw. mit im Querschnitt von der Kreisform abweichenden Formen konnten nicht sicher gewährleisten, dass ein Verdrehen des Spikes ausgeschlossen wird. Bisher sind nur rotationssymmetrische und drehrunde patrizenförmige Werkzeuge und entsprechend geformte Löcher in den Profilklötzen bekannt geworden.

Von diesem seit langem bekannten Weg weichen die Erfinder mit ihrem patrizenförmigen Werkzeug ab. Dieser bisherige Weg beruhte vor allem auf dem Vorurteil, dass beim Ausformen des Reifens, d. h. also, wenn die Form zur Entnahme des Reifens geöffnet wird, nur bei drehrunden patrizenförmigen Werkzeugen die entstehenden Ausformkräfte beim Abziehen des Reifens von den patritzenförmigen Werkzeugen in erträglichen Maßen gehalten werden können. Die Erfinder haben aber überraschend festgestellt, dass die Ausziehwiderstände und Kräfte auch in einem hinnehmbaren Rahmen bleiben, wenn erfindungsgemäße Werkzeuge eingesetzt werden.

In vorteilhaften Ausgestaltung der Erfindung gemäß den Unteransprüchen sind vielfache Ausgestaltungen bezüglich der Form des Kopfes und des Schaftes dargelegt. Besonders bevorzugt wird es, wenn der Kopf gegenüber dem Schaft bundartig erweitert ist, wobei zumindest der Kopf einen von der Kreisform abweichenden Querschnitt aufweist.

Ein mittels des erfindungsgemäßen patrizenförmigen Werkzeugs hergestellter Reifen weist in seinen Profilklötzen jeweils wenigstens ein entsprechend geformtes Loch auf, d. h. also ein Loch, das zumindest bereichsweise im Querschnitt eine von der Kreisform abweichende Form aufweist.

Gemäß praktischen Ausgestaltungen der Erfindung kann dann hierbei vorgesehen sein, dass die Profilklötze zusätzlich zu wenigstens einem Loch noch wenigstens einen durch eine Lamelle der Reifenvulkanisationsform gebildeten Einschnitt aufweisen. Derartige aus dem Stand der Technik bekannte Einschnitte dienen bei Winterreifen zusätzlichen Eis- und Schneegriffigkeit.

Des Weiteren kann vorgesehen sein, dass in wenigstens ein Loch ein Spike eingesetzt ist, dessen Querschnitt zumindest bereichsweise von der Kreisform abweicht.

Weitere Vorteile in der Ausgestaltung der Erfindung werden im Folgenden anhand von Ausführungsbeispielen in der Beschreibung, der Bezugszeichenliste, der Zeichnung und den Patentansprüchen näher beschrieben. Die Zeichnung zeigt:
- Fig. 1: ein erstes Ausführungsbeispiel eines erfindungsgemäßen Werkzeuges im Längsschnitt,
- Fig. 2, Fig. 2a: ein zweites Ausführungsbeispiel von der Seite und von oben,
- Fig. 3, Fig. 3a: das Werkzeug aus Figur 1 von der Seite und von oben,
- Fig. 4, Fig. 4a: ein drittes Ausführungsbeispiel von der Seite und von oben
- Fig. 5, Fig. 5a: ein viertes Ausführungsbeispiel von der Seite und von oben, und
- Fig. 6, Fig. 6a: ein fünftes Ausführungsbeispiel von der Seite und von oben.

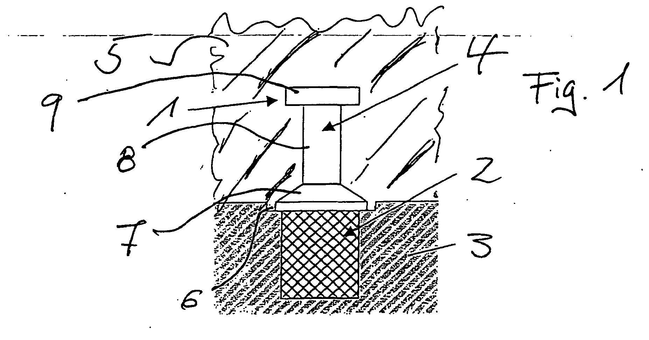

In Figur 1 ist ein erstes Ausführungsbeispiel eines patrizenförmigen Werkzeuges 1 im Längsschnitt dargestellt. Dieses weist ein hinteres Ende 2 auf, welches in eine nur schematisch angedeutete Reifenvulkanisationsform 3 kraftschlüssig eingesetzt ist. Ein vorderes Ende 4 des Werkzeuges 1 bildet den Teil des Werkzeuges 1, welcher beim Schließen der Reifenvulkanisationsform 3 in Berührkontakt mit Kautschukmaterial eines nur angedeuteten Profilklotzes 5 des Laufstreifens eines nicht näher dargestellten Fahrzeugreifens gelangt und während des Schließens der Reifenvulkanisationsform den Profilklotz 5 penetriert. Das vordere Ende besteht aus einem Rand 6, einer sich an diesen anschließenden kegeligen Schulter 7, welche sich konisch bis zu einem Schaft 8 verjüngt. Der Schaft 8 trägt einen Kopf 9, welcher in dem in Figur 1 dargestellten Ausführungsbeispiel bundweitig erweitert ist und - wie in Figur 3a in Draufsicht zu erkennen ist - eine ovale Querschnittsform aufweist, während der Schaft 8 der in den Figuren 1, 3 und 3a dargestellten ersten Ausführungsform einen kreisrunden Querschnitt aufweist.

In den Figuren 2,4 bis 6 sind weitere Ausführungsformen jeweils in seitlicher Ansicht dargestellt; die entsprechenden dazugehörigen Draufsichten dieser Ausführungsformen sind in den Figuren 2a, 4a bis 6a dargestellt.

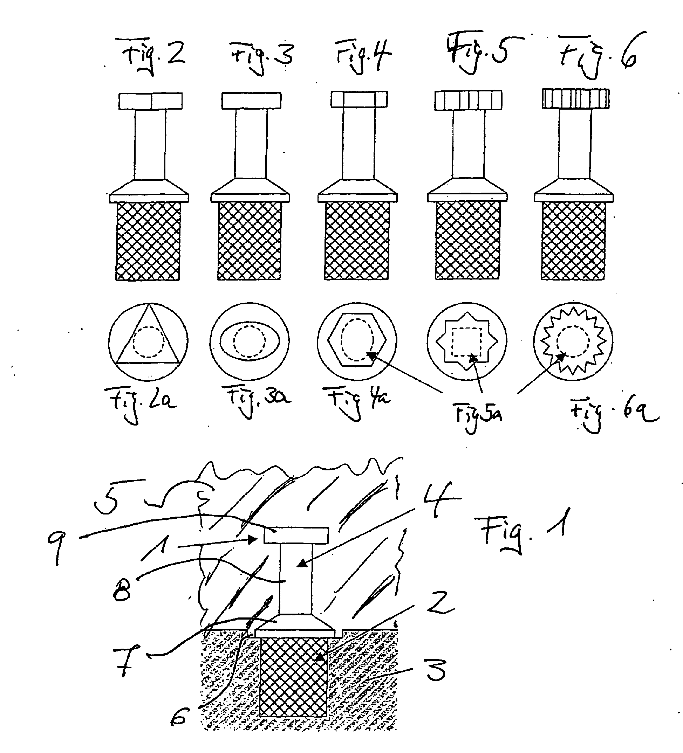

So weisen dort die Köpfe einen dreieckigen (Fig. 2, 2a), sechseckigen (Fig. 4, 4a) oder sternförmigen (Fig5 - 6a) Querschnitt auf. Die Schäfte 8 der in den Figuren 4a und 5a dargestellten Ausführungsformen weisen einen ovalen bzw. quadratischen Querschnitt auf, während die anderen in den Figuren dargestellten Schäfte 8 einen runden Querschnitt aufweisen.

Es sind jedoch auch andere Konstellationen denkbar, also beliebige Kombinationen von Köpfen und Schäften mit rechteckigen, polygonalen, trapezförmigen, rautenförmigen, T-förmigen, winkelförmigen, zickzack-förmigen, halbrunden oder sonstigen von der Kreisform abweichenden Querschnitten, wobei auch Ausführungsformen denkbar sind, bei denen der Kopf jeweils den gleichen Durchmesser wie der Schaft aufweist und wobei Schaft und Kopf beide den gleichen, oder unterschiedliche von einer Kreisform abweichende Querschnittsform aufweisen. Erheblich ist, dass wenigstens Schaft oder Kopf eine Form aufweisen, die von der Kreisform abweicht, damit später nach Einführen eines Spikes das diesen umgebende Gummimaterial des Loches zumindestens bereichsweise unrund ist, wodurch ein Verdrehen des Spikes um seine Längsachse vermieden werden kann.

### Bezugszeichenliste

- 1: Patrizenförmiges Werkzeug
- 2: Hinteres Ende
- 3: Reifenvulkanisationsform
- 4: Vorderes Ende
- 5: Profilklotz
- 6: Rand
- 7: Schulter
- 8: Schaft
- 9: Kopf

## Patentansprüche

1. Patrizenförmiges Werkzeug (1) einer Reifenvulkanisationform (3) zur Ausbildung eines Lochs in einem Profilblock (5) eines Laufstreifens eines Fahrzeugreifens, mit einem hinteren Ende (2) zum Einsatz in die Reifenvulkanisationsform und mit einem vorderen Ende (4) zur Ausbildung des Lochs im Profilklotz, wobei das vordere Ende aus Schaft (8) und Kopf (9) besteht,
**dadurch gekennzeichnet, dass**
der Querschnitt des vorderen Endes (4) zumindest bereichsweise von einer kreisrunden Form abweicht.

2. Werkzeug nach Anspruch 1, **dadurch gekennzeichnet, dass** der Kopf (9) des vorderen Endes (4) einen von einer kreisrunden Form abweichenden Querschnitt aufweist.

3. Werkzeug nach Anspruch 1 oder 2, **dadurch gekennzeichnet, dass** der Schaft (8) des vorderen Endes (4) einen von einer kreisrunden Form abweichenden Querschnitt aufweist.

4. Werkzeug nach einem der vorgehenden Ansprüche, **dadurch gekennzeichnet, dass** der Querschnitt des Schaftes (8) bzw. des Kopfes (9) die Form eines Dreiecks, einer Ellipse, eines Sechsecks, eines Achtecks, eines Sterns, eines Polygons, eines Trapezes, eines Halbkreises, eines Viertelkreises, eines Quadrats oder eines Rechteckes aufweist.

5. Fahrzeugluftreifen mit einer Vielzahl von in einem Laufstreifen ausgebildeten Profilklötzen (5) wobei in wenigstens einem Profilklotz (5) wenigstens ein Loch eingebracht ist, **dadurch gekennzeichnet, dass** die Form des Lochs der Form des patrizenförmigen Werkzeuges (1) gemäß den Merkmalen wenigstens einer der vorangegangenen Ansprüche entspricht.

6. Fahrzeugluftreifen nach Anspruch 5, **dadurch gekennzeichnet, dass** wenigstens ein Profilklotz (5) mit wenigstens einem lamellenartigen Einschnitt versehen ist.

7. Fahrzeugluftreifen an Anspruch 5 oder 6, **dadurch gekennzeichnet, dass** in das Loch des Profilklotzes (5) ein Spike eingesetzt ist.

8. Fahrzeugluftreifen nach Anspruch 7, **dadurch gekennzeichnet, dass** der Querschnitt zumindest bereichsweise von einer kreisrunden Form abweicht.

## Revendications

1. Outil (1) en forme de poinçon pour moule de vulcanisation (3) de bandage, pour pratiquer un trou dans un bloc profilé (5) d'une bande de roulement de bandage pneumatique pour véhicule, présentant une extrémité arrière (2) pour l'introduction dans le moule de vulcanisation et une extrémité avant (4) pour pratiquer le trou dans le bloc profilé, l'extrémité avant étant constituée d'une tige (8) et d'une tête (9), **caractérisé en ce que** la section transversale de l'extrémité avant (4) s'écarte d'un cercle au moins par endroits.

2. Outil selon la revendication 1, **caractérisé en ce que** la tête (9) de l'extrémité avant (4) a une section transversale qui s'écarte d'un cercle.

3. Outil selon les revendications 1 ou 2, **caractérisé en ce que** la tige (8) de l'extrémité avant (4) a une section transversale qui s'écarte d'un cercle.

4. Outil selon l'une des revendications précédentes, **caractérisé en ce que** la section transversale de la tige (8) et de la tête (9) a la forme d'un triangle, d'une ellipse, d'un hexagone, d'un octogone, d'une étoile, d'un polygone, d'un trapèze, d'un demi-cercle, d'un quart de cercle, d'un carré ou d'un rectangle.

5. Bandage pneumatique pour véhicule, comprenant plusieurs blocs profilés (5) formés dans une bande de roulement, au moins un trou étant pratiqué dans au moins un bloc profilé (5), **caractérisé en ce que** la forme du trou correspond à la forme de l'outil (1) en forme de poinçon selon les caractéristiques d'au moins une des revendications précédentes.

6. Bandage pneumatique pour véhicule selon la revendication 5, **caractérisé en ce qu'**au moins un bloc profilé (5) est doté d'au moins une entaille lamellaire.

7. Bandage pneumatique pour véhicule selon les revendications 5 ou 6, **caractérisé en ce qu'**un crampon est inséré dans le trou du bloc profilé (5).

8. Bandage pneumatique pour véhicule selon la revendication 7, **caractérisé en ce que** la section transversale s'écarte d'un cercle au moins par endroits.

## Claims

1. Male moulding tool (1) of a tyre vulcanizing mould (3) for forming a hole in a profile block (5) of a tread rubber of a vehicle tyre, with a rear end (2) for insertion into the tyre vulcanizing mould and with a front end (4) for forming the hole in the profile block, the front end comprising a shaft (8) and a head (9), **characterized in that** the cross section of the front end (4) deviates from a circular shape at least in certain regions.

2. Tool according to Claim 1, **characterized in that** the head (9) of the front end (4) has a cross section deviating from a circular shape.

3. Tool according to Claim 1 or 2, **characterized in that** the shaft (8) of the front end (4) has a cross section deviating from a circular shape.

4. Tool according to one of the preceding claims, **characterized in that** the cross section of the shaft (8) or the head (9) has the form of a triangle, an ellipse, a hexagon, an octagon, a star, a polygon, a trapezium, a half-circle, a quarter-circle, a square or a rectangle.

5. Pneumatic vehicle tyre with a multiplicity of profile blocks (5) formed in a tread rubber, at least one hole being made in at least one profile block (5), **characterized in that** the form of the hole corresponds to the form of the male moulding tool (1) according to the features of at least one of the preceding claims.

6. Pneumatic vehicle tyre according to Claim 5, **characterized in that** at least one profile block (5) is provided with at least one lamellar indentation.

7. Pneumatic vehicle tyre according to Claim 5 or 6, **characterized in that** a spike is inserted in the hole of the profile block (5).

8. Pneumatic vehicle tyre according to Claim 7, **characterized in that** the cross section deviates from a circular form at least in certain regions.
